# EUROPEAN PATENT APPLICATION

(11) **EP 4 749 763 A1**
(43) Date of publication of application: **27.05.2026**
(21) Application number: 24215429.2
(22) Date of filing: 26.11.2024
(51) Int. Cl.: H01M 10/613, H01M 10/625, H01M 10/647, H01M 10/6557, H01M 10/6567

(54) **A BATTERY MODULE AND A BATTERY PACK INCLUDING THE SAME**

(71) Applicant: SAMSUNG SDI CO., LTD., Yongin-si, Gyeonggi-do 17084 (KR)
(72) Inventor: BLODER, Martin, 8261 Sinabelkirchen (AT)
(74) Representative: Gulde & Partner

(57) **Abstract**

The present disclosure refers to a battery module (100) with a plurality of battery cells (10) arranged in a stacking direction (D) and a plurality of cooling plates (20) arranged between battery cells (10) in the stacking direction (D). A plurality of telescopic cooling connectors (30) is provided each interconnected with an adjacent telescopic cooling connector (30) along at least one side of the battery cells (10) in the stacking direction (D) to form a fluid-connected cooling path (32) in the stacking direction (D) and which are respectively connected to a corresponding cooling plate (20) to be fluid-connected with the cooling plate (20). Each telescopic cooling connector (30) includes a first hollow connection portion (36, 36', 36") extending in a stacking direction (D) or a direction opposite to the stacking direction, and a second hollow connection portion (38, 38', 38") extending in a direction opposite to the first hollow connection portion (36, 36', 36"), wherein each interconnection between adjacent telescopic cooling connectors (30) includes a first hollow connection portion (36, 36', 36") of a telescopic cooling connector (30) fitted into the second hollow connection portion (38, 38', 38") of the adjacent telescopic cooling connector (30), wherein the telescopic cooling connector (30) includes a connection opening (34) extending in a height direction (H) of the battery module (100), and wherein an end portion (22) of the respective cooling plate (40) passes through the connection opening (34) to be connected with the telescopic cooling connector (30).

## Description

### Field of the Disclosure

The present disclosure relates to a battery module, a battery pack including the same, a battery system and a vehicle including the battery system.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Battery modules require a cooling structure for prismatic and pouch type battery cells and that allow to carry away heat from the battery cells.

Current coolant structures require a spatial and high manufacturing costs for providing cooling plates between the battery cells. Thereby, achieving excellent cooling and thermal propagation characteristics comes with other disadvantages.

Additionally, the inevitable thickness tolerances of both the cell spacers as well as the battery cells lead to either drastically varying pre-tensions on the stack (bad for performance) or costly and space- and/or time-consuming measures of cell-stack length compensation are required.

Further, it may be desirable that a coolant structure may provide mechanical stability additional to cell-stack length compensation.

### Summary of Invention

The invention is defined by the appended claims. The description that follows is subjected to this limitation. Any disclosure lying outside the scope of the claims is only intended for illustrative as well as comparative purposes.

According to an embodiment, a battery module is provided which includes a plurality of battery cells arranged in a stacking direction. The battery module includes a plurality of cooling plates arranged between battery cells in the stacking direction. A plurality of telescopic cooling connectors is provided each interconnected with an adjacent telescopic cooling connector along at least one side of the battery cells in the stacking direction to form a fluid-connected cooling path in the stacking direction and which are respectively connected to a corresponding cooling plate to be fluid-connected with the cooling plate. Each telescopic cooling connector includes a first hollow connection portion extending in the stacking direction or a direction opposite to the stacking direction and a second hollow connection portion extending in a direction opposite to the first hollow connection portion. Each interconnection between adjacent telescopic cooling connectors includes a first hollow connection portion of a telescopic cooling connector fitted into the second hollow connection portion of the adjacent telescopic cooling connector. The telescopic cooling connector includes a connection opening extending in a height direction of the battery module. An end portion of the respective cooling plate passes through the connection opening to be connected with the telescopic cooling connector.

According to another embodiment, a battery pack may include at least one battery module according to the above embodiments.

According to another embodiment, a battery system may include at least one battery module according to the above embodiments.

Yet another embodiment of the present disclosure refers to a vehicle including the battery system.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1A illustrates a perspective view on a battery module according to an embodiment.
FIG. 1B illustrates a cross section along I-I of the battery module of FIG. 1A according to an embodiment.
FIGS. 2A - 2C illustrate a telescopic cooling connector from different perspectives according to an embodiment of the disclosure.
FIG. 3 illustrates another cross section along III-III of the battery module of FIG. 1A according to an embodiment.
FIG. 4 illustrates a cross-sectional view of an end portion of a cooling plate according to another embodiment.
FIG. 5 illustrates a cross-sectional view of an end portion of a cooling plate according to another embodiment.
FIG. 6 illustrates a telescopic cooling connector according to another embodiment of the disclosure.
FIG. 7 illustrates a telescopic cooling connector according to another embodiment.
FIGS. 8A - 8C illustrate a perspective view and a cross sections of a battery module according to another embodiment.
FIG. 9 illustrates a telescopic cooling connector according to another embodiment.
FIGS. 10A - 10B illustrate a perspective view of a battery module according to another embodiment.
FIGS. 11A - 11C illustrate cross sections of a cooling plate according to an embodiment.
FIG. 12 illustrates a deformation characteristic of a battery module according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure."

It will be understood that although the terms "first" and "second" are used to describe various elements, these elements should not be limited by these terms. These terms are only used to distinguish one element from another element. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an embodiment, a battery module is provided which includes a plurality of battery cells arranged in a stacking direction. The battery module includes a plurality of cooling plates arranged between battery cells in the stacking direction. A plurality of telescopic cooling connectors is provided each interconnected with an adjacent telescopic cooling connector along at least one side of the battery cells in the stacking direction to form a fluid-connected cooling path in the stacking direction and which are respectively connected to a corresponding cooling plate to be fluid-connected with the cooling plate. Each telescopic cooling connector includes a first hollow connection portion extending in the stacking direction or a direction opposite to the stacking direction and a second hollow connection portion extending in a direction opposite to the first hollow connection portion. Each interconnection between adjacent telescopic cooling connectors includes a first hollow connection portion of a telescopic cooling connector fitted into the second hollow connection portion of the adjacent telescopic cooling connector.

The cooling plates may be made from metal, e.g. aluminum. The telescopic cooling connectors may be made from a synthetic material such as a plastic material or a thermoplastic. The cooling plates may be extruded cooling plates, e.g., formed by an extrusion process. The telescopic cooling connectors may be joined to the cooler facing opposite directions, as shown, or also facing the same direction. The connection through fitting, e.g. tight fitting, may mean that a friction connection is provided between the telescopic cooling connectors. The interconnection along at least one side of the battery cells may mean that the telescopic cooling connectors are arranged in a chain. Thus, a linear cooling path in stacking direction is formed. Each of the telescopic cooling connectors is interconnected with two adjacent telescopic cooling connectors apart from the telescopic cooling connectors at the end of the chain. The telescopic cooling connectors at the ends may be used as coolant inlets or coolant outlets, respectively. The fitting may mean that an outer surface of the first hollow connection portion and an inner surface of the second hollow connection portion abut with each other and/or form a friction connection. Thus, leakage is reduced due to the tight fitting.

The battery module has an advantage that the telescopic cooling connectors serve for providing distributing coolant to the cooling plates to cool the battery cells while allowing to adapt to a length compensation position since the first hollow connection portion is able to move or slide inside the second hollow connection portion in response to a thickness change of the battery cell stack. Thus, the fitting interconnections of the telescopic cooling connectors can (internally) absorb length changes in the battery cell stack, caused for example by heat expansion, battery cell swelling or a charging process. In other words, the cooling plates are connected via telescopic cooling connectors adapted such that a change of thickness of the battery cells is at least partially compensated by the coolant connectors. Further, no additional fixation members are needed to provide the interconnection between adjacent telescopic cooling connectors to form the cooling path. Thus, a high-energy and high-safety but low-cost exchangeable battery module is provided. The telescopic cooling connectors provide stability to the battery module by connecting to each other in a bending-resistant way.

According to an embodiment, the first hollow connection portion includes at least one seal member on the outer surface and/or the second hollow connection portion includes at least one seal member on the inner surface. Since using the at least one seal member, despite of the interconnections, leakage is minimized. The seal member may be an elastomer or rubber seal. The seal member may be either applied directly in the production of the telescopic cooling connector, for example, in a two-component injection molding process or may be applied afterwards, for example, in a removable or non-removable way. In an embodiment, by using two seal members with a set distance in the stacking direction, the sealing function and mechanical stability may be further improved by giving the contact points some leverage. A seal member may include at least one protruding ring member to improve sealing.

According to an embodiment, the first hollow connection portion fitted into the second hollow connection portion is configured to slide inside the second hollow connection portion in response to a change of thickness of at least one among the plurality of battery cells or of the stacked battery cells. The change of thickness may be in other words a swelling. The change thickness may require to be above a threshold to cause the slide movement. Thus, the system of interconnected telescopic cooling connectors can (internally) absorb a length change in the battery cell stacked.

According to an embodiment, the telescopic cooling connector includes a connection opening extending in a height direction of the battery module, wherein an end portion of the respective cooling plate passes through the connection opening to be connected with the telescopic cooling connector. Thus, the entire end plate is received by the telescopic cooling connector cooling plate. The connection opening may be an elongated opening. Therefore, the cooling plate is stably supported through the telescopic cooling connector.

According to an embodiment, the end portion of the cooling plate includes a chamfered and/or rounded portion. Thus, the geometrical characteristics of the end portions are altered. This may strengthen a connection not only in the manufacturing but also in the interconnected state. The chamfered ends or rounded ends may be prepared prior to a joining process by chamfering the ends. For example, a material subtraction process or bending/deforming may be applied.

According to an embodiment, the end portion has a region with a surface roughness that is higher than of a region away from the end portion. Therefore, the surface characteristics are altered. This may be done prior to the actual joining, e.g. by roughening the surface of the end portion. Since the end portion has a relatively higher surface roughness, an improved connection strength may be achieved for example for gluing or thermoplastic bonding. This may be due to an increase of surface area available for a material bonding.

According to an embodiment, the end portion includes a surface coating having a higher surface connectivity than the (un-altered) surface of the cooling plate. Therefore, the surface characteristics are locally altered. This may be done prior to the actual joining, e.g. by dipping, spraying or brushing the end portion. Since the end portion has a relatively higher surface connectivity (e.g. higher molecular bonding connectivity), an improved connection strength may be achieved for example for gluing or thermoplastic bonding. This may be due to an increase of molecular surface area available for a material bonding. The surface coating may be in other words a connectivity-increasing coating. The higher surface connectivity may refer higher molecular bonding connectivity.

According to an embodiment, the cooling plate includes a metal and the telescopic cooling connector includes a thermoplastic material, wherein the cooling plate is glued to the respective telescopic cooling connector. The gluing may be done in the connection opening to fixate the cooling plate within the connection opening.

According to an embodiment, the cooling plate includes a metal and the telescopic cooling connector includes a thermoplastic material, wherein the cooling plate is bonded to the respective telescopic cooling connector by thermoplastic bonding. Since the metal structure of the cooling plate has small cavities, in particular, when having relatively high surface roughness, e.g. contours, caves and undercuts, a liquid plastic may flow into these cavities and undercuts to fill these small cavities without air pockets and voids in the connection. Therefore, a high-strength mechanical connection and an extremely tight connection can be achieved. In embodiments, the cooling connector is either injection molded onto the cooling plate or the telescopic cooling connectors are produced prior to joining the cooling plate by thermoplastic bonding to the cooling plate.

According to an embodiment, the first and the second hollow connection portion have a circular circumference (e.g., boundary of the hollow body). A tight and stable interconnection is provided that has excellent compensation response. In particular, a pressure distribution is homogeneously distributed over the entire perimeter which makes it easier to provide a tight fitting. Further, circular openings are easier to produce and can be rapidly manufactured.

According to an embodiment, the first and the second hollow connection portion have an elongated circumference (e.g., boundary of the hollow body) including a straight boundary portion extending in height direction of the battery module. The cross sections of the telescopic connections with higher heights may have an effect that the battery module have shorter width while maintaining the same cross section for the coolant path.

According to an embodiment, the first and the second hollow connection portion have an elliptic circumference (e.g., boundary of the hollow body) elongate in the height direction of the battery module. The cross sections of the telescopic connections with higher heights may have an effect that the battery module may have smaller width while maintaining the same cross section for the coolant path.

According to an embodiment, the telescopic cooling connectors include at least one snap-fit member connecting the respective telescopic cooling connectors with at least one cover of the battery module and/or for connecting to a part of a battery pack. Thus, the telescopic cooling connectors may provide not only a cooling supply function but may actively stabilize and support the battery module. The at least one cover may be a busbar cover. In an embodiment, it may be a cover disposed on the busbar cover.

According to an embodiment, the battery module includes a vent cover disposed on venting openings of the battery cells, wherein the at least one cover is disposed (located) on the vent cover, wherein the at least one cover includes a plurality of openings and the at least one snap-fit member is coupled to the at least one cover through the openings. Thus, the vent cover may be pressed by the action of the snap-fit to thereby providing a tension or press force on the vent cover to secure the contact of the battery cells with the vent cover.

According to an embodiment, at least one cover covers cell terminals and/or busbars of the battery cells, wherein the at least one cover has a convex shape along the stack direction and at least one tension strip is wrapped around the plurality of battery cells and extending along the top surface in stack direction. A convexly shaped cover, e.g. bus-bar and electronic cover, may press down on the vent cover added on top of the battery cells. This may be done before wrapping with tension strips. The bus-bar covers protect the bus-bars and electronics from hot particles in the event of a thermal run-away, and provide an even pressure distribution onto the vent cover along the stack's length. This may provide mechanical stability to the assembly, and similar elements may be added on the underside of the stack as well. The at least one cover may be made from pressed sheet metal or some other high-temperature and flame-resistant material. They may extend outside the cell top area to also protect the telescopic cooler assembly.

According to an embodiment, each cooling plate includes cooling chambers and a deformation structure including a stepped portion between two main sides of the cooling plate configured to transfer compressive forces between the two main sides of the cooling plate. This may add to the thickness absorbing telescopic cooling connectors by providing a deformation structure. This may lead to a linear plastic increase in the force response.

According to an embodiment, the battery module includes tension strips and end plates, wherein the cell stack is compressed between the end plates by the tensioning strips encircling the battery cell stack and the end plates, wherein the end plates include a convex shape. This may provide an even pressure distribution onto the battery cell stack.

According to an embodiment, a battery pack may include at least one battery module according to the embodiments above.

According to an embodiment, a vehicle or battery system may include at least one battery pack.

### Specific Embodiments

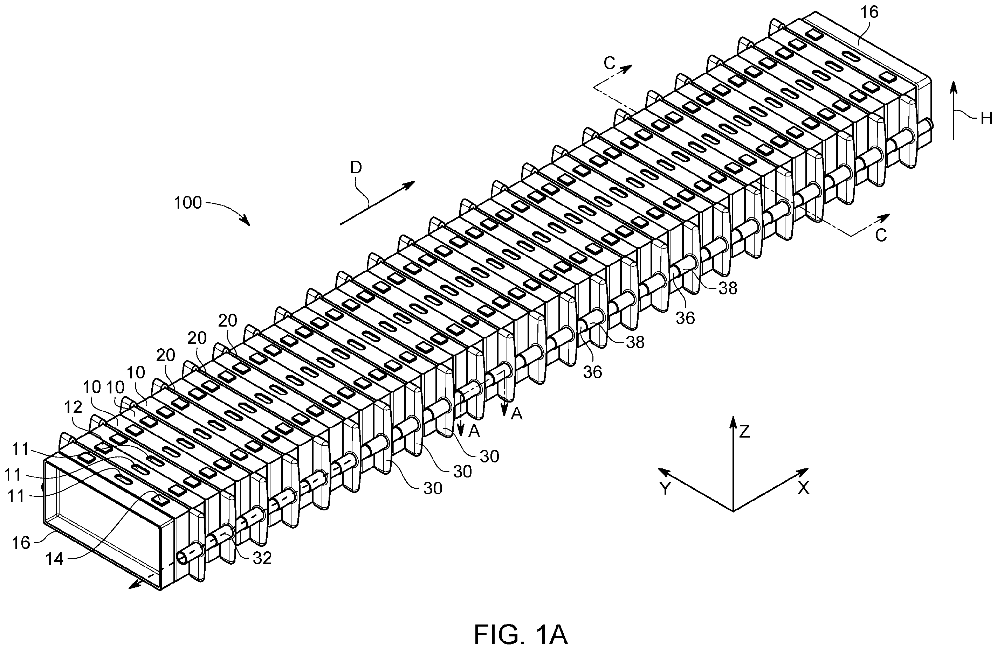

FIG. 1A shows a perspective view illustrating a battery module 100 according to an embodiment of the invention. The battery module 100 includes a plurality of battery cells 10. The battery cells 10 are arranged, i.e. disposed, in a stacking direction D. As such the battery cells 10 may form a battery stack. The battery cells 10 may be prismatic battery cells but the invention is not restricted thereto. The battery cells 10 may each include a first (e.g. positive) cell terminal 12 and a second (e.g., negative) cell terminal 14. Further, each of the battery cells 10 may include a vent opening 11. The vent opening 11 may allow to release hot gases in an event of, for example, thermal runaway.

For example, the battery cells 10 are stacked in the stacking direction D so that main sides 26, 26' of the battery cells 10 are facing each other. The battery module 100 further may include end plates 16 which are located at the respective ends of the stacked battery cells 10. The end plates 16 may be used to compress the battery module 100 to preset length.

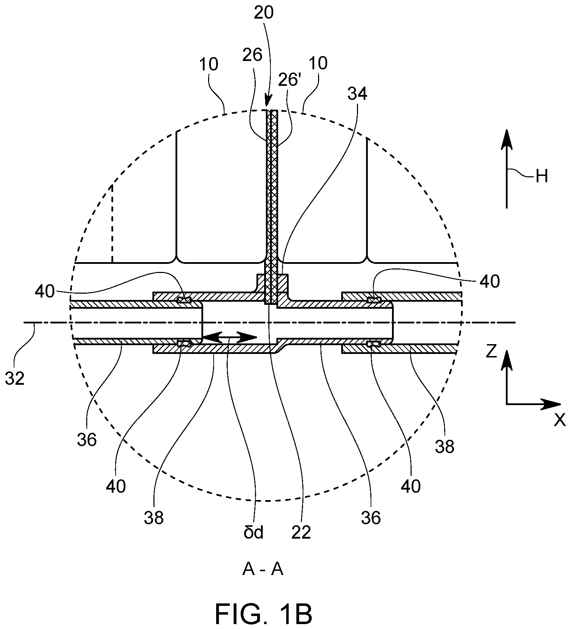

The battery module 100 includes a plurality of cooling plates 20. The cooling plates 20 are arranged between battery cells 10 in the stacking direction D. For example, each cooling plate 20 is disposed between two adjacent battery cells 10. According to the example in FIG. 1, the cooling plates 20 are disposed between every second battery cell 10, i.e., adjacent cooling plates 20 are separated by two battery cells 10. However, the invention is not restricted thereto and the cooling plates 20 may be disposed between each adjacent battery cells 10. In other embodiments, more battery cells 10 may be located between two adjacent cooling plates 20. The cooling plates 20 may include a metal, for example aluminum, but the invention is not restricted thereto. The cooling plates may include cooling chambers, or channels, so that a coolant can pass through the cooling plates 20 to cool adjacently positioned battery cells 10 in operation.

The battery module 100 includes a plurality of telescopic cooling connectors 30. The telescopic cooling connectors 30 may include synthetic material like a plastic, in example, a thermoplastic material. The telescopic cooling connectors 30 may be located on at least one side of the battery module 100. For example, the telescopic cooling connectors 30 may be located on both sides of the plurality of battery cells 10 as shown in FIG. 1.

The telescopic cooling connectors 30 are interconnected with each other in the stacking direction D to form chain of telescopic cooling connectors 30. Therefore, each telescopic cooling connector 30 is connected with two adjacent telescopic cooling connectors 30. Due to being interconnected, the telescopic cooling connectors 30 form a fluid-connected cooling path 32 in the stacking direction D (which is indicated in FIG. 1). Therefore, a coolant can be transported through the chain of telescopic cooling connectors 30 to be fed to the cooling plates 20. In the present example, on each side of the battery stack a cooling channel 32 is formed. The telescopic cooling connectors 30 at an end of the chain may form a cooling inlet and/or a cooling outlet, respectively, to allow for cooling to flow through the battery module 100.

The telescopic cooling connectors 30 are each respectively connected to a corresponding cooling plate 20. Thus, since the telescopic cooling connectors 30 are fluid-connected with the cooling plate 20, coolant can enter the cooling plate 20 and be discharged from the cooling plate 20 through the telescopic cooling connector 30. Examples of the telescopic cooling connector 30 according to embodiments of the invention are described in the following.

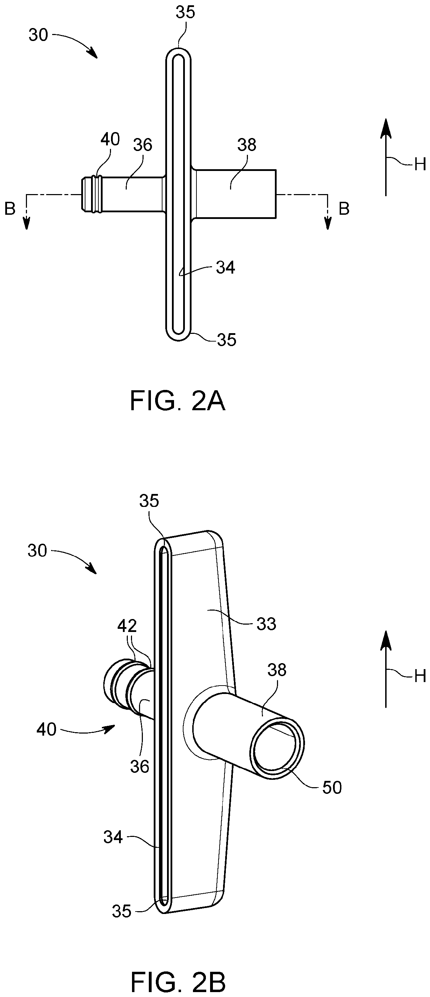

In the following, reference is made to FIG. 1B which shows a cross section along A-A as illustrated in FIG. 1A for illustrating the connection between adjacent telescopic cooling connectors 30 according to an embodiment of the invention and FIGS. 2A to 2C showing a telescopic cooling connector 30 according to an embodiment of the invention.

The telescopic cooling connectors 30 each include a first hollow connection portion 36. In this example, the first hollow connection portion 36 extends in the stacking direction D. However, in other example, first hollow connection portion 36 may extend in opposite direction to the stacking direction D.

The telescopic cooling connectors 30 each include a second hollow connection portion 38. The second hollow connection portion 38 of the telescopic cooling connector 30 extends in opposite direction to the first hollow connection portion 36.

The first hollow connection portion 36 of a telescopic cooling connector 30 is fitted, at least to some extent, into the second hollow connection portion 38 of an adjacent telescopic cooling connector 30. This may be the case for all telescopic cooling connectors 30 in the battery cell stack which is shown in FIGS.1A and 1B.

The first hollow connection portion 36 and the second hollow connection portion 38 are interconnected by fitting (e.g., by forming a friction connection) the first hollow connection portion 36 into the adjacent telescopic cooling connector 30. For example, connection may be formed between an outer surface 37 of the first hollow connection portion 36 and an inner surface 39 of the second hollow connection portion 38 of an adjacent telescopic cooling connector 30. For example, the inner surface 39 of the second hollow connection portion 38 may abut against the outer surface 37 of the first hollow connection portion 36. Thus, a tight connection is provided without requiring any additional fixation means. The telescopic cooling connectors 30, due to the fitting connection, can not only distribute cooling to the cooling plates 20 to cool the battery cells but allows the first hollow connection portion 36 being able to move inside the second hollow connection portion 38 (for example by a compensation increment δd illustrated in FIG. 1B for illustration) to absorb the length change. As an example, a change in length may be caused by heat expansion, battery cell swelling or a charging process. The interconnection provides stability to the battery module by connecting to each other in a bending-resistant way.

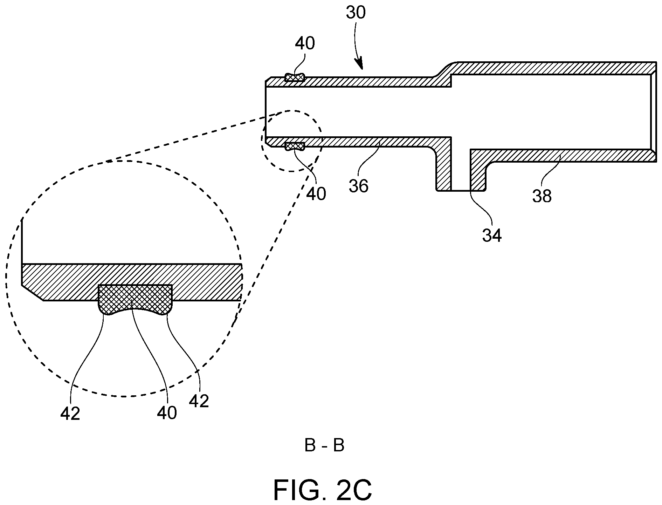

As shown in FIGS. 1A and 1B and in FIG. 2C, the first hollow connection portion 36 may further include a seal member 40. In an example, the seal member 40 is formed on the outer surface 37 of the first hollow connection portion 36. In another example the second hollow connection portion 38 includes at least one seal member 40 on the inner surface 39.

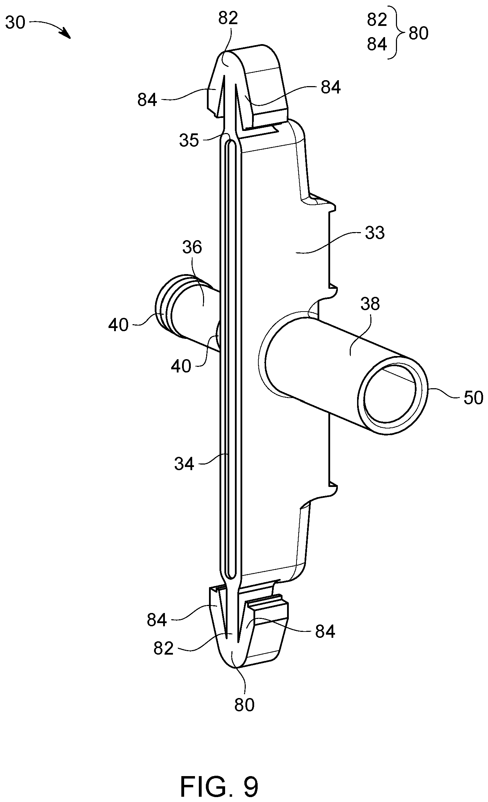

In other examples, two or more seal members 40 may be provided having a set distance from each other which may improve the sealing function (see for example FIG. 9 but can be applied to any of the described embodiments) by giving contact points some leverage. The seal member 40 may prevent leakage of coolant along the coolant path 32. The seal members 40 may include a protruding portion 42, i.e. protruding ring, which extends along the circumference of the outer surface 37 of the first hollow connection portion 36 to improve the sealing function. Thus, a risk of leakage of coolant from the cooling path 32 along the telescopic connectors 30 may be reduced.

Referring now to FIGS. 2A - 2C, a telescopic cooling connector 30 may be described in more detail. Referring to the isometric view of FIG. 2B, the telescopic cooling connector 30 may include a main body 33. The telescopic cooling connector 30 may include a connection opening 34 on an inner side. The connection opening 34 may extend in a height direction H of the battery module 100. The connection opening 34 may be a slit opening (or slit, elongated opening).

The end portion 22 of the respective cooling plate 20 may at least partially pass through the connection opening 34 (see FIG. 1B). Since the connection opening 34 extends in the height direction H, the entire end portion 22 in height direction H of the cooling plate 20 can be received. Thus, the cooling plate 20 is stably supported by the telescopic cooling connector 30. The cooling plate 20 can be connected to the telescopic cooling connector 30 in the connection opening 34. For example, side surfaces of the end portion 22 may be coupled to the inner surface of the connection opening 34. The connection may be performed via gluing and/or thermoplastic bonding as example and as explained further below, but is not limited thereto.

The connection opening 34 may include rounded and/or chamfered end portions 35 around the connection opening 34. Thus, a tight fitting of a cooling plate 20 having the same shape with the connection opening 34 may be achieved. Thus, leakage of fluid being transferred between cooling plate 20 and telescopic cooling connector 30 may be reduced.

Referring again to FIGS. 2A or 2B, the first and the second hollow connection portion 36, 38 have a circular circumference 50. Since the hollow connection portion 36, 38 have a circular circumference 50, the contact surface of the friction connection between first and the second hollow connection portion 36, 38 is cylindrical, e.g., with spherical circumference. This makes it easier to seal the fitted (friction) contact due to the more homogeneous pressure between the cylindrical contacts with spherical circumference.

FIG. 2C shows a cross section along section B-B as indicated in FIG. 2A. The first and/or the second hollow connection portion 36, 38 may include a seal member 40. The seal member 40 may prevent leakage of coolant along the coolant path 32. The seal members may include a protruding portion 42, i.e. protruding ring to improve the sealing function.

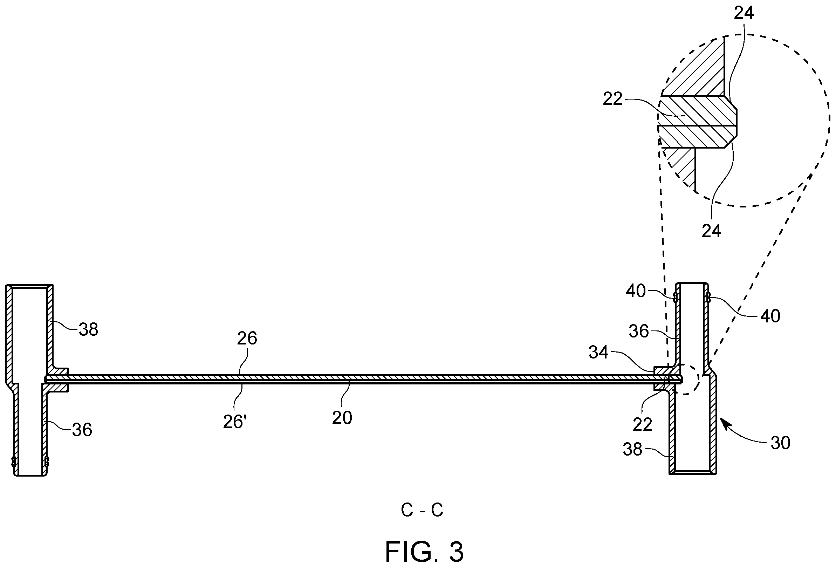

FIG. 3 illustrates another cross section along to a line III-III of the battery module 100 of FIG. 1A. Referring now to the cross section in FIG. 3 for being a planar cross section C-C as indicated in FIG. 1A, and embodiment connection between the cooling plate 20 and the telescopic cooling connector 30 where geometrical characteristics of the end portions 22 are altered. As shown in the insertion state of FIG. 3, the end portions 22 of the cooling plate 20 may include chamfered portions 24. In other embodiments, the end portions 22 may be rounded. The chamfered ends or rounded ends may be prepared prior to a joining process. For example, a material subtraction process or bending/deforming may be applied. The chamfered portions 24 may ease the connection process and also strengthen the connection in the final state.

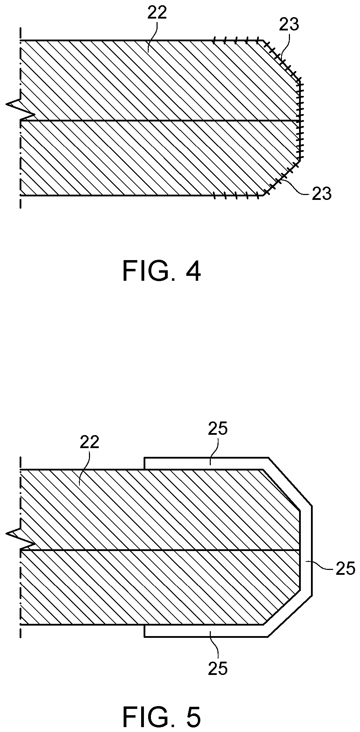

Referring now to the cross section of FIG. 4, an end portion 22 according to another embodiment may be provided according to which the surface characteristic is altered. In this example, the end portion 22 may have a region 23 with a surface roughness that is higher than of a region away from the end portion 22. This may be done prior to the actual joining, e.g. by roughening the surface of the end portion 22. Since the end portion 22 has a relatively higher surface roughness, an improved connection strength for connection processes like gluing or thermoplastic bonding may be provided. For example, the coupling strength with the connection opening 34 (e.g. inner surface thereof) can be enhanced.

Referring now to the cross section of FIG. 5, an end portion 22 according to another embodiment may be provided according to which the surface characteristic is altered. The end portion 22 may include a surface coating 25 having a molecular bonding connectivity (e.g., a molecular bonding connectivity) that is higher than the surface connectivity of the cooling plate 20. Since the end portion 22 has a relatively higher surface connectivity, an improved connection strength for connection processes like for gluing or thermoplastic bonding may be provided. For example, the coupling strength with the connection opening 34 (e.g. inner surface thereof) can be enhanced.

As already mentioned above, the cooling plate 20 being metal may be glued to the respective telescopic cooling connector 30. When the cooling plate 20 is glued to the telescopic cooling connector 30, the shape and/or surface modification improve the connection strength between cooling plate 20 and telescopic cooling connector 30. The gluing may be done in the connection opening 34 to fixate the cooling plate 20 within the connection opening 34 of the telescopic cooling connector 30.

However, in other embodiments, the telescopic cooling connector 30 is thermoplastic and coupled by thermoplastic bonding, e.g. thermoplastic-metal bonding to the cooling plate 20. For example, the cooling plate 20 may be a metal, e.g., including aluminum Al. Due to the metal structure of the cooling plate 20 having small cavities, a liquid plastic may flow therein to fill these small cavities without air pockets and voids in the connection. Therefore, a high-strength mechanical connection and an extremely tight connection can be achieved. The bonding may be done in two ways. The telescopic cooling connector 30 is either injection molded onto the cooling plate 20 or the telescopic cooling connectors 30 are produced prior to joining the cooling plate 20 by thermoplastic bonding to the telescopic cooling connector 30.

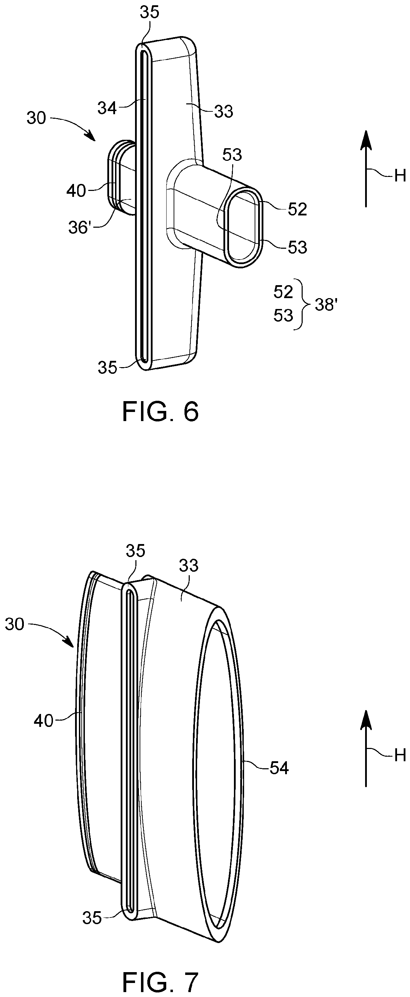

FIG. 6 shows an isometric view of another embodiment for the telescopic cooling connector 30. Only the differences with respect to FiGS. 3A-3C are described for the sake of conciseness. In particular, the cross sections in FIG. 3A and 3C may be alike or at least similar and are not repeated.

In this example, the first and the second hollow connection portion 36', 38' have an elongated circumference 52 in height direction H of the battery module 100. Another example may be provided in FIG. 7. The elongated circumference 52 in this example may include a straight boundary portion 53 extending in height direction H of the battery module 100. The elongated circumference 52 may further include rounded end parts (e.g. cylindrical end parts). Therefore, since the first and the second hollow connection portion 36', 38' have an elongated circumference 52, a width of the battery module 100 may not be excessively increased while maintaining or increasing a cross section area for coolant to flow through the telescopic cooling connectors 30. Due to the combination of straight boundary portion 53 and rounded edges, good sealing properties and tightness of the contact, e.g. by using additional seal member 40, may be secured.

FIG. 7 shows an isometric view of another embodiment for the telescopic cooling connector 30. Only the differences with respect to FIGS. 2A-2C are described for the sake of conciseness. In particular, the cross sections in FIG. 2A and 2C may be alike or at least similar and are not repeated.

In this example, the first and the second hollow connection portion 36", 38" have an elongated circumference 54 height direction H of the battery module 100. In this particular example, the first and the second hollow connection portion 36", 38' have an elliptic circumference 54 elongate in height direction H of the battery module 100. Therefore, since the first and the second hollow connection portion 36", 38" have an elongated circumference 54, a width of the battery module 100 may not be excessively increased while maintaining or increasing a cross section area for coolant to flow through.

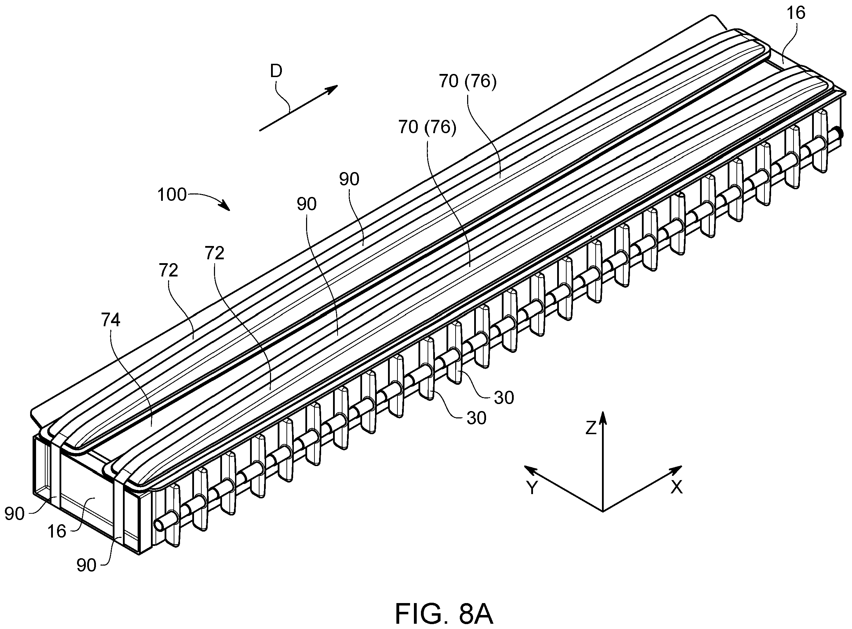

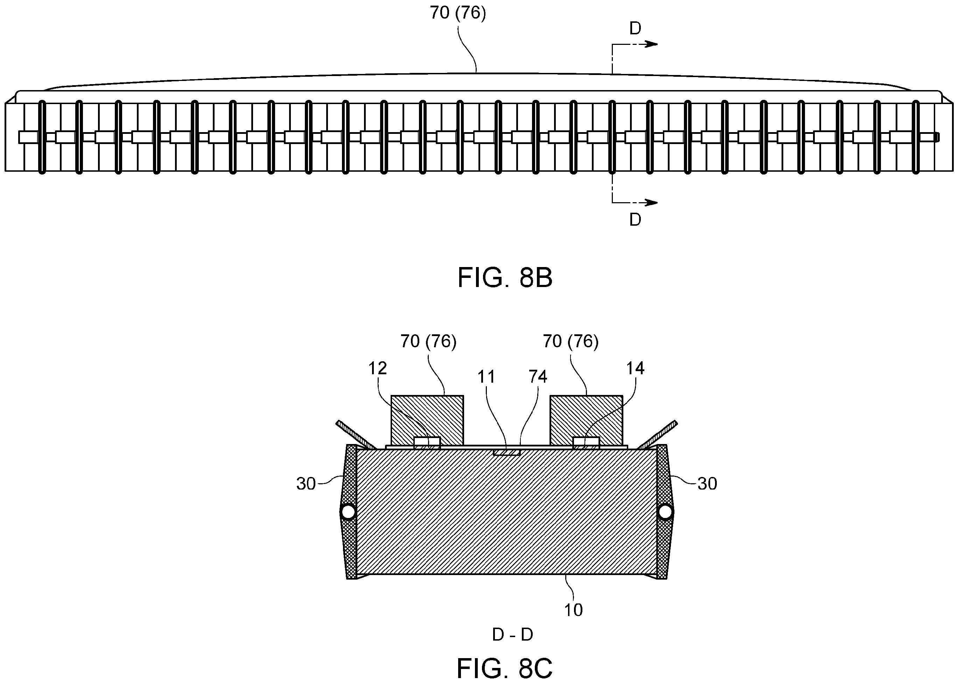

FIG. 8A shows an isometric view of a battery module 100 according to an embodiment. The battery module 100 includes additional means to provide tension in the battery module 100. FIG. 8B refers to side view of the same battery module 100 and FIG. 8C is a cross section according to D:D as indicated in FIG. 8B.

The battery module 100 includes at least one tension strip 90 wrapped around the plurality of battery cells 10. In the example, the two tension strips 90 are provided.

The battery module may further include at least one cover 70. The at least one cover 70 may be a busbar cover that covers cell terminals 12, 14 and/or busbars of the battery cells 10 or may be an additional cover located on a busbar cover. The at least one cover 70 may also be an electronic cover. Below the least one cover 70, a vent cover 74 may be provided that covers the vent openings 11 of the battery cells 10 as shown, for example, in FIG. 1. The at least one cover 70 may be disposed on said vent cover 74. The at least one cover 70 presses down on the vent cover 74 before it gets wrapped with tension strips 90.

In this example, the at least one tension strip 90, here two tension strips 90, are wrapped around the plurality of battery cells 10 and extend along a top surface 72 of the at least one cover 70 in stack direction D. Thus, the tension strips 90 cause a tension around the entire battery module 100. In this particular example, the at least one cover 70 has a convex shape along the stack direction D as shown in FIG, 8B. Thus, a homogenous tension is provided. For example, the vent cover 74 is homogeneously pressed by the tension strip 90 against the top surface of the battery cells 10.

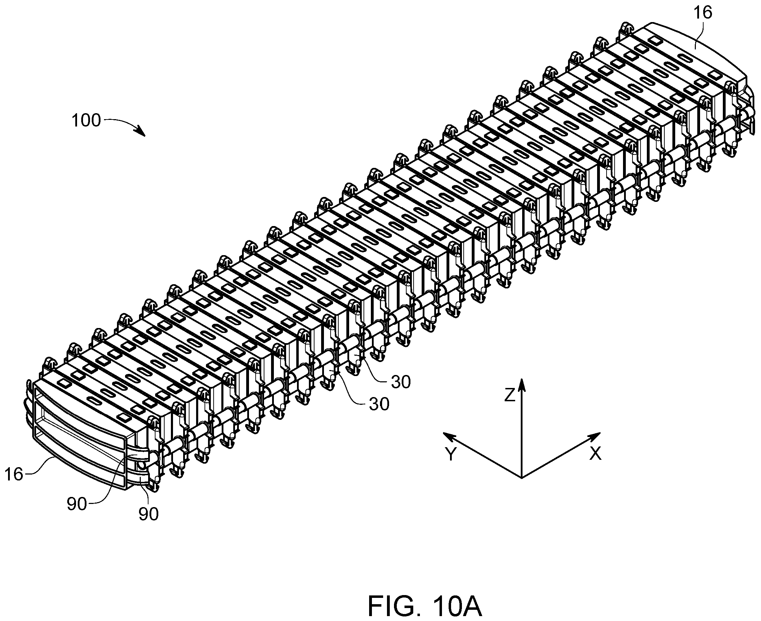

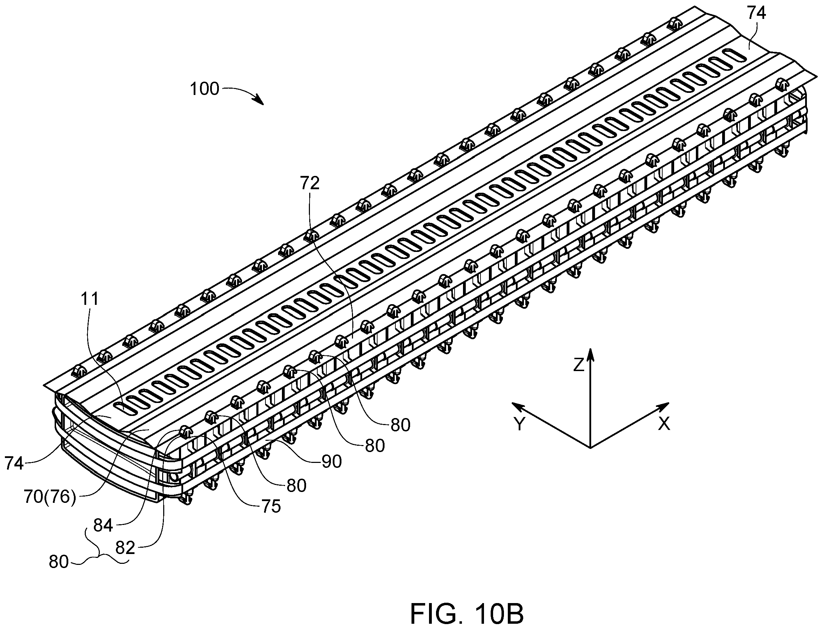

FIG. 9 shows another embodiment of the telescopic cooling connector 30. Only the differences with respect to FIGS. 2A-2C are described for the sake of conciseness. In particular, the cross sections in FIG. 2A and 2C may be alike and are not repeated. The embodiment can be combined with the embodiments of having non-cylindrical cross-section characteristics as shown in FIGS. 6 and 7 and the other embodiment. FIGS. 10A and 10B refer to battery modules 100 which incorporate the telescopic cooling connectors 20.

In these embodiments, the telescopic cooling connector 30 includes at least one snap-fit member 80. The snap-fit member 80 may provide an additional mechanically stabilization function to the battery module 100 as described below.

Referring to FIG. 10B, according to an embodiment, the telescopic cooling connectors 30 include at least one snap-fit member 80 connecting the respective telescopic cooling connectors 30 with at least one cover 70 of the battery module 100 and/or for connecting to a part of a battery pack. Thus, the telescopic cooling connectors may provide not only a cooling supply function but may actively stabilize and support the battery module 100.

In an embodiment as shown in FIG. 9, on the bottom and on the top of each telescopic cooling connector 30, a snap-fit member 80 may be provided. Further, referring to FIG. 9, the snap-fit member 80 may include a main body 82 that is a central body and two (i.e., at least one) wing bodies 84 that extend from the central body 82.

FIG. 10A shows a battery module 100 in an unconnected state without covers and FIG. 10B being in a connected state with covers 70.

Referring to FIG. 10B, the at least one cover 70 may include a plurality of openings 75. The battery module 100 may include a vent cover 74 disposed on vent openings 11 of the battery cells 10. At least one cover 70 is disposed (located) on the vent cover 74, wherein the at least one cover includes a plurality of openings 75. The at least one snap-fit member 80 is coupled to the at least one cover 70 through the openings 75. The snap-fit members 80 may be pressed through the respective openings 75 until the wing bodies 84 expand after being pushed through the openings 75 to thereby providing a stable and secure connection. The lower surface of the wing bodies 84 may press against the top surface 72 of the at least one cover 70. The at least one cover 70 may be a busbar cover or an electronic cover. In an embodiment, the at least one cover 70 may be a cover disposed on the busbar cover. Thus, the vent cover 74 may be pressed by the action of the snap-fit member 80 to thereby provide a tension or press force for the vent cover to secure the contact of the battery cells with the vent cover.

An additional tension strip 90 may be provided. For example, tension strips 90 may be provided that span around end plates 16 of the battery module 100 to further increase the stability of the battery module 100 in this embodiment.

In an embodiment, the end plates 16 may have a convex outer shape in this embodiment. Thus, the end plates 16 provide an even pressure distribution along the width of the plurality of battery cells 10. Additional stability can be gained through portions of the telescopic cooling connector 30 connecting with the tension strips 90 surrounding the battery module 100. The end plates 16 may be made from a synthetic, e.g. plastic, and be provided for the battery module 100.

The bus-bar covers may cover the bus-bars and electronics. The bus-bar covers may protect from hot particles in the event of a thermal run-away, and are designed to provide an even pressure distribution onto the vent cover 74 along the length of the stacked battery cells 10.

Another cover layer may be added on top using either the same or different snap-fit members 80 to create a vent-gas channel. The covers may be made from pressed sheet metal or some other high-temperature and flame-resistant material. They may extend outside the cell top area to also protect the telescopic cooler assembly.

The complete battery module 100 may be installed in a battery pack by coupling the lower snap-fit members 80 of the telescopic cooling connectors 30 with a part of the battery pack, e.g., a battery pack frame. The snap-fit members 80 may attach to the battery pack frame of longitudinal or transversal beams. Thus, in these embodiments, the telescopic cooling connectors 20 may have an additional function in securing mechanical integrity of the entire battery module 100 and/or battery pack.

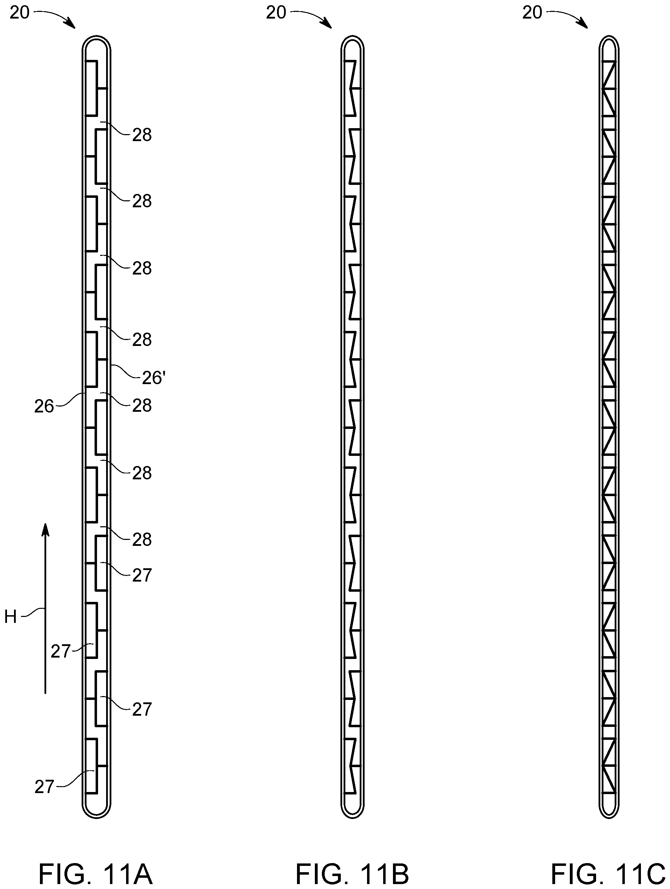

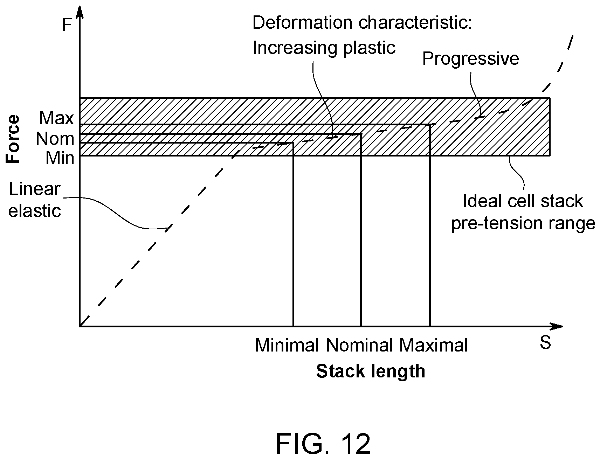

FIGS. 11A-11C show a cross section profile of a cooling plate 20 according to an embodiment of the invention. FIG. 12 shows a force response of battery module 100 using cooling plates 20 as described below. This deformation structure of the cooling plate 20 may be combined with any of the previously described embodiments and may improve the response behavior on length variations. Thus, in embodiments, it may be combined together with the telescopic cooling connectors 30.

In this embodiment, referring to the uncompresses state in FIG. 11A, the cooling plate 20 includes a plurality of cooling chambers 27. These cooling chambers 27 may be fluid-connected with a respective telescopic cooling connector 30 so that coolant can flow through the cooling plate 20 from a telescopic cooling connector 30. The cooling chambers 27 may be positioned alternatingly along the height direction H between a position located at a main side 26 (left position) and a position at an another main side 26' opposite therefrom (right position).

The cooling plate 20 may include a deformation structure. The deformation structure may include a plurality of stepped portions 28 between the two main sides 26, 26' of the cooling plate 20. The plurality of stepped portions 28 are arranged in a height direction and are alternatingly arranged between a position located at the main side 26 (left position) and a position at the main side 26' opposite therefrom (right position) along the height direction H. The plurality of stepped portions 28 form the cooling chambers 27. The stepped portions 28 may connect to each other at respective interfaces. As will be shown below, the deformation structure including the stepped portions 28 is configured to compress between the two main sides of the cooling plate 20. This is shown in the partly compressed state of FIG. 11B and the fully compressed state in FIG. 11C. This compressing enabled by the deformation structure having the stepped portion 28 may result in a tailor-made increasing slope of the plastic deformation force as shown in FIG. 12 illustrating schematically a force response according to stack length (in dependence of a stack length).

That is, due to the present deformation structure as the inner structure including the partition walls having stepped portions 28 of the cooling plate 20 between the two main sides 26, 26' as described above, a mostly even pressure distribution from the top to the bottom of the cooling plate 20 achieved. This is superior to prior art cooling plates and allows to reach a desired increasing slope of the plastic deformation force as shown in in FIG. 12. This is advantageous over prior arts having a strictly linear deformation characteristic.

Further, conventional battery cell stacks including battery cells 10 as well as cell spacers feature a progressive force to elongation ratio due to the material and geometric properties. In such case, deviations like a small cell thickness variation may already cause a steep increase or decrease of force applied on the cell stack, which in turn may reduce a battery stacks performance significantly. To mitigate this, very strict and expensive production tolerances have to be met, or other costly and intricate ways of adjusting the cell stacks pre-tension and/or end plate positioning during production have to be implemented. The above deformation structure may cure the above-mentioned problems by providing the deformation structure which may, in embodiments, cooperate together with the telescopic cooling connectors 30 to improve a better response characteristic on stack length variations.

In summary, a battery module 100 is provided which includes telescopic cooling connectors 30 for distributing coolant to the cooling plates 20 to cool the battery cells 10 while allowing, by fitting interconnections of the telescopic cooling connectors, an (internal) absorbance of length changes in the battery cell stack, for example caused by heat expansion, battery cell swelling or a charging process. Further, no additional fixation members are needed to provide the interconnection between adjacent telescopic cooling connectors 30 to form the cooling path 32 for a coolant. The telescopic cooling connectors 30 may further be used to provide mechanical stability to the battery module 100 and mechanical connectivity to the battery pack's frame.

### Reference signs

- 100: battery module

- 10: battery cell
- 11: vent opening
- 12: first cell terminal
- 14: second cell terminal
- 16: end plate

- 20: cooling plate
- 22: end portion
- 23: region with high surface roughness
- 24: chamfered portion
- 25: surface coating
- 26, 26': main side
- 27: cooling chamber
- 28: stepped portion

- 30: telescopic cooling connector
- 32: cooling path
- 33: main body
- 34: connection opening
- 35: (rounded) end portions
- 36, 36', 36": first hollow connection portion
- 37: outer surface
- 38, 38', 38": second hollow connection portion
- 39: inner surface

- 40, 40': seal member
- 42: protruding portion
- 50: circular circumference
- 52: elongated circumference
- 53: straight boundary portion
- 54: elliptic circumference

- 70: cover
- 72: top surface
- 74: vent cover
- 75: openings
- 76: busbar cover

- 80: snap-fit member
- 82: main body
- 84: wing portion

- 90: tension strip

- D: stacking direction
- H: height direction
- δd: compensation increment

## Claims

1. A battery module (100), comprising:
a plurality of battery cells (10) arranged in a stacking direction (D);
a plurality of cooling plates (20) arranged between battery cells (10) in the stacking direction (D);
a plurality of telescopic cooling connectors (30) each interconnected with an adjacent telescopic cooling connector (30) along at least one side of the battery cells (10) in the stacking direction (D) to form a fluid-connected cooling path (32) in the stacking direction (D) and which are respectively connected to a corresponding cooling plate (20) to be fluid-connected with the cooling plate (20),
wherein each telescopic cooling connector (30) comprises a first hollow connection portion (36, 36', 36") extending in a stacking direction (D) or a direction opposite to the stacking direction, and a second hollow connection portion (38, 38', 38") extending in a direction opposite to the first hollow connection portion (36, 36', 36"),
wherein each interconnection between adjacent telescopic cooling connectors (30) comprises a first hollow connection portion (36, 36', 36") of a telescopic cooling connector (30) fitted into the second hollow connection portion (38, 38', 38") of the adjacent telescopic cooling connector (30),
wherein the telescopic cooling connector (30) comprises a connection opening (34) extending in a height direction (H) of the battery module (100), and
wherein an end portion (22) of the respective cooling plate (40) passes through the connection opening (34) to be connected with the telescopic cooling connector (30).

2. The battery module (100) as claimed in claim 1, wherein the first hollow connection portion (36, 36', 36") comprises at least one seal member (40) on an outer surface (37) and/or the second hollow connection portion (38, 38', 38") comprises at least one seal member (40) on an inner surface (39).

3. The battery module (100) as claimed in one of the preceding claims 1 to 2, wherein the first hollow connection portion (36, 36', 36") fitted into the second hollow connection portion (38, 38', 38") is configured to slide inside the second hollow connection portion (38, 38', 38") in response to a change of thickness of at least one among the plurality of battery cells (10).

4. The battery module (100) as claimed in in one of the preceding claims 1 to 3, wherein the end portion (22) of the cooling plate (20) comprise a chamfered portion (24) and/or a rounded portion.

5. The battery module (100) as claimed in one of the preceding claims 1 to 4, wherein the end portion (22) has a region (23) with a surface roughness that is higher than a surface roughness of a region away from the end portion (22).

6. The battery module (100) as claimed in one of the preceding claims 1 to 5, wherein the end portion (22) comprises a surface coating (25) having a surface connectivity that is higher than the surface connectivity of the cooling plate (20).

7. The battery module (100) as claimed in one of the preceding claims 1 to 6, wherein the cooling plate (20) comprises metal and the telescopic cooling connector (30) comprises a thermoplastic material, and
wherein cooling plate (20) is glued to the respective telescopic cooling connector (30).

8. The battery module (100) as claimed in one of the preceding claims 1 to 6,
wherein the cooling plate (20) comprises metal and the telescopic cooling connector (30) comprises a thermoplastic material, and
wherein the telescopic cooling connector (30) is coupled by thermoplastic bonding to the cooling plate (20).

9. The battery module (100) as claimed in one of the preceding claims 1 to 8, wherein the first and the second hollow connection portion (36, 38) have a circular circumference (50).

10. The battery module (100) as claimed in one of the preceding claims 1 to 8, wherein the first and the second hollow connection portion (36', 38') have an elongated circumference (52) comprising a straight boundary portion (53) extending in height direction (H) of the battery module (100).

11. The battery module (100) as claimed in one of the preceding claims 1 to 8, wherein the first and the second hollow connection portion (36", 38") have an elliptic circumference (54) elongate in height direction (H) of the battery module (100).

12. The battery module (100) as claimed in one of the preceding claims 1 to 11, wherein the telescopic cooling connectors (30) comprise at least one snap-fit member (80) connecting the respective telescopic cooling connectors (30) with at least one cover (70) of the battery module (100) and/or for connecting to a part of a battery pack.

13. The battery module (100) as claimed in preceding claim 12, further comprising a vent cover (74) disposed on venting openings (11) of the battery cells (10), wherein the at least one cover (70) is disposed on the vent cover (74), wherein the at least one cover (70) comprises a plurality of openings (75) and the at least one snap-fit members (80) are coupled to the at least one cover (70) through the openings (75).

14. A battery pack comprising at least one battery module (100) as claimed in one of the preceding claims 1 to 13.

## Amended claims

### Amended claims in accordance with Rule 137(2) EPC.

1. A battery module (100), comprising:
a plurality of battery cells (10) arranged in a stacking direction (D);
a plurality of cooling plates (20) arranged between battery cells (10) in the stacking direction (D);
a plurality of telescopic cooling connectors (30) each interconnected with an adjacent telescopic cooling connector (30) along at least one side of the battery cells (10) in the stacking direction (D) to form a fluid-connected cooling path (32) in the stacking direction (D) and which are respectively connected to a corresponding cooling plate (20) to be fluid-connected with the cooling plate (20),
wherein each telescopic cooling connector (30) comprises a first hollow connection portion (36, 36', 36") extending in a stacking direction (D) or a direction opposite to the stacking direction, and a second hollow connection portion (38, 38', 38") extending in a direction opposite to the first hollow connection portion (36, 36', 36"),
wherein each interconnection between adjacent telescopic cooling connectors (30) comprises a first hollow connection portion (36, 36', 36") of a telescopic cooling connector (30) fitted into the second hollow connection portion (38, 38', 38") of the adjacent telescopic cooling connector (30),
wherein the telescopic cooling connector (30) comprises a connection opening (34) on an inner side extending in a height direction (H) of the battery module (100),
wherein an end portion (22) of the respective cooling plate (40) passes through the connection opening (34) to be connected with the telescopic cooling connector (30), and
**characterized in that**,
the first hollow connection portion (36, 36', 36") fitted into the second hollow connection portion (38, 38', 38") is configured to slide inside the second hollow connection portion (38, 38', 38") in response to a change of thickness of at least one among the plurality of battery cells (10).

2. The battery module (100) as claimed in claim 1, wherein the first hollow connection portion (36, 36', 36") comprises at least one seal member (40) on an outer surface (37) and/or the second hollow connection portion (38, 38', 38") comprises at least one seal member (40) on an inner surface (39).

3. The battery module (100) as claimed in in one of the preceding claims 1 to 2, wherein the end portion (22) of the cooling plate (20) comprise a chamfered portion (24) and/or a rounded portion.

4. The battery module (100) as claimed in one of the preceding claims 1 to 3, wherein the end portion (22) has a region (23) with a surface roughness that is higher than a surface roughness of a region away from the end portion (22).

5. The battery module (100) as claimed in one of the preceding claims 1 to 4, wherein the end portion (22) comprises a surface coating (25) having a molecular bonding connectivity that is higher than the molecular bonding connectivity of the cooling plate (20).

6. The battery module (100) as claimed in one of the preceding claims 1 to 5, wherein the cooling plate (20) comprises metal and the telescopic cooling connector (30) comprises a thermoplastic material, and
wherein cooling plate (20) is glued to the respective telescopic cooling connector (30).

7. The battery module (100) as claimed in one of the preceding claims 1 to 6, wherein the cooling plate (20) comprises metal and the telescopic cooling connector (30) comprises a thermoplastic material, and
wherein the telescopic cooling connector (30) is coupled by thermoplastic bonding to the cooling plate (20).

8. The battery module (100) as claimed in one of the preceding claims 1 to 7, wherein the first and the second hollow connection portion (36, 38) have a circular circumference (50).

9. The battery module (100) as claimed in one of the preceding claims 1 to 8, wherein the first and the second hollow connection portion (36', 38') have an elongated circumference (52) comprising a straight boundary portion (53) extending in height direction (H) of the battery module (100).

10. The battery module (100) as claimed in one of the preceding claims 1 to 9, wherein the first and the second hollow connection portion (36", 38") have an elliptic circumference (54) elongate in height direction (H) of the battery module (100).

11. The battery module (100) as claimed in one of the preceding claims 1 to 10, wherein the telescopic cooling connectors (30) comprise at least one snap-fit member (80) connecting the respective telescopic cooling connectors (30) with at least one cover (70) of the battery module (100) and/or for connecting to a part of a battery pack.

12. The battery module (100) as claimed in preceding claim 11, further comprising a vent cover (74) disposed on venting openings (11) of the battery cells (10), wherein the at least one cover (70) is disposed on the vent cover (74), wherein the at least one cover (70) comprises a plurality of openings (75) and the at least one snap-fit members (80) are coupled to the at least one cover (70) through the openings (75).

13. A battery pack comprising at least one battery module (100) as claimed in one of the preceding claims 1 to 12.
